# EUROPEAN PATENT SPECIFICATION

(11) **EP 1 656 425 B1**
(45) Date of publication and mention of the grant of the patent: **21.11.2007**
(21) Application number: 04780701.1
(22) Date of filing: 11.08.2004
(51) Int. Cl.: C09D 5/02, C08L 71/00, C09D 171/00

(54) **CURABLE POLYMERIC WATER BASED COATING COMPOSITIONS AND RESULTING COATINGS WITH BARRIER PROPERTIES FOR GASES AND COATED SUBSTRATES AND CONTAINERS**
HÄRTBARE POLYMERE WASSERBASIERTE BESCHICHTUNGSMASSEN UND DIE BESCHICHTUNGEN MIT BARRIEREEIGENSCHAFTEN GEGENÜBER GASEN SOWIE DAMIT BESCHICHTETE SUBSTRATE UND BEHÄLTER
COMPOSITIONS DE REVETEMENT AQUEUSES POLYMERES DURCISSABLES ET REVETEMENTS EN RESULTANT DOTES DE PROPRIETES DE BARRIERE POUR LES GAZ ET SUBSTRATS ET RECIPIENTS AINSI REVETUS

(30) Priority: 11.08.2003 US 494271 P
(43) Date of publication of application: 17.05.2006
(73) Proprietor: THE GLIDDEN COMPANY, Strongsville, Ohio 44136 (US)
(72) Inventor: BODE, Daniel, Cleveland, OH 44115 (US); LI, Cathy, Brecksville, OH 44141 (US); MOCK, Michael, Brett, Stow, OH 44224 (US)
(74) Representative: Johnston, Walter Paul
(86) International application number: PCT/US2004/025909
(87) International publication number: WO 2005/019355

(56) References cited:
- US-A- 3 960 983
- US-A- 4 141 871
- US-B1- 6 180 715

## Description

This application claims benefit and priority under 35 U.S.C. 119(e) from provisional application Ser. No. 60/494,271 filed August 11, 2003, which is hereby incorporated by reference.

### Field

The present invention relates to polymer containing compositions which also have water in the nature of water based, waterborne, latex, emulsion or dispersion compositions. These compositions yield dried and/or cured coatings on various substrates with properties of decreased permeability from that of the uncoated substrate to various gases such as carbon dioxide and oxygen or either alone.

### Technical Discussion

Plastic materials find increasing utilization as containers or parts of containers for a multitude of materials such as, for example, beverages, food materials and liquids and solids used in medical applications like diagnostic substances. Also, various other substrates such as paper packaging, paper board material and films offer benefits for packaging and containers. A few of the advantages of the polymeric substrates and films offered in packaging applications include lighter weight and easy disposability or recyclability. Some of the polymeric materials gaining popularity as substrates and films for packaging of materials like those aforementioned in and of themselves generally lack any resistance to the permeability of various gases across or through the substrates and films. For instance, carbon dioxide and oxygen permeability of these materials, depending on thickness, can counteract the natural advantages of weight reduction of these materials to retard their development or expansion towards a sufficient packaging material of choice. Also other advantages of these polymeric materials such as decreased breakage and potentially lower cost, can be offset by their lack of resistance to various gases.

Oxygen and carbon dioxide can pass through most of the plastic materials traditionally used in the packaging industry including those of polyesters, polycarbonates, and polyolefins. The storage life of materials to be packaged such as foods, beverages, medicines, medical supplies, may be prematurely shortened because of the attack of carbon dioxide and/or oxygen. The carbon dioxide attack generally is the escape of carbon dioxide from materials with carbon dioxide while in storage. The leakage of carbon dioxide from plastic carbonated beverage containers causes these beverages to loose their fizz. The susceptibility of materials packaged in polymeric or plastic containers to oxidative degradation truncates the shelf life of the packaged materials. For instance, polyethylene terephthalate ("PET") is used frequently as the container in the bottling industry for both carbonated and non-carbonated beverages and food drinks. With the PET containers having a susceptibility to carbon dioxide and oxygen permeability, the packaged or contained carbonated beverage is subjected to a two fold hit that decreases shelf life. First the carbon dioxide can escape over time from the carbonated beverage, and second, oxygen can enter the container and the beverage and adversely affect the beverage from oxidation. Even for non-carbonated beverages such as juices in PET bottles, the entry of oxygen into the bottle can adversely affect taste from oxidation of the juice over time.

Recently, technology has offered various barrier coating materials for such substrates to improve the resistance or retard permeability of the coated plastic material like blown PET bottles to various gases such as carbon dioxide and oxygen. For instance, coatings with barrier properties for application to the blown PET bottle have been developed which have a certain concentration of nitrogen in the polymer structure as amine nitrogen content through the reaction of polyepoxide adducts with polyamine adducts. Examples of these coatings are shown in U.S. Patents, 5,573,819 and 5,489,455. The PET bottles are blow molded from preforms. A more efficient application of a barrier coating for bottles and containers that undergo a sizing process step to the configuration of the final packaging material is to have a less rigid coating than a cured thermosetting coating that is applied before the sizing step such as blow molding from a preform or orienting alignment of biaxial films of polyolefin. The recently developed barrier coatings that are thermosetting coatings that are applied and cured on the final container like the blown bottle can not offer this improved efficiency in producing container material with barrier coatings. Additionally, application of a coating with barrier properties to PET bottle preforms also drives down the cost of improving shelf life of plastic packaged materials.

It is an object of the present invention to provide coating compositions to yield barrier coatings for use on preforms of the container material before the container assumes its final configuration to benefit the efficiencies of the container manufacturing process.

It is a further object of the invention to provide preforms of containers with a coating composition to yield a container with a useful configuration for packaging purposes with a barrier coating to reduce the permeability of the polymeric or plastic container material.

A further additional object of the invention is to provide a coating composition that when applied to polymeric or plastic material with a higher permeability to gases such as carbon dioxide and/or oxygen has a reduced permeability to one or more of these gases for a longer period of time.

### Summary of the Invention

The present invention is directed to a composition for coating plastic or polymeric material or paper or paper board to result in a coated material with improved resistance to permeability of carbon dioxide and/or oxygen over a period of time better than the uncoated material. The coating and coated material and articles are also provided by the present invention. The composition of the present invention is a curable or cross-linkable film-forming coating composition which is water-containing, borne, or based coating composition with at least one water dispersion or solution of poly(hydroxy amino ethers) or polyetheramines (hereinafter "polyetheramine") and at least one water dispersible or solubilizable aminoplast reactive with the polyetheramine. The coating composition can produce a coating film with improved properties of resistance or reduced permeability to gases, for example oxygen and/or carbon dioxide. The coating composition is applied to the aforementioned materials and forms a coating film on the materials in the forms of containers like bottles or is used as a package film wrapper or sheets for substrates of the aforementioned materials.

The polyetheramine can be prepared by contacting one or more of the diglycidyl ethers of a dihydric phenol with a difunctional amine (an amine having two amine hydrogens) under conditions sufficient to cause the amine moieties to react with epoxy moieties to form a polymer backbone having amine linkages, ether linkages and pendant hydroxyl moieties, which can be solubilized with one or more protic or aprotic acids (about 1 to about 30 percent based on solids more suitably about 7 to about 20 percent based on solids). The aminoplast is present in the composition in an amount up to 50 weight percent of the solids of the coating composition, particularly where the aminoplast is a melamine formaldehyde alkyl ether. Higher amounts of the aminoplast approaching 50 weight percent in the composition can lead to a more rigid thermoset type of network with less flexibility for the formed coating which is suitable for rigid sheet applications but less than desirable for preform coating applications.

The amount of the one or more polyether amine can be in the range of 50 to less than 100 weight percent of the total solids of the coating composition. Also the polyetheramines can be comprised of one or more of the diglycidyl ethers of a dihydric phenol having up 80 mole percent of the ethers of resorcinol diglycidyl ether (hereinafter referred to as "RDGE"). More suitably the mole percent of ethers from RDGE is in the range of 20 to 70 and most suitably 40 to 60. The dispersion or solution of the polyether amine can be formed with an amount of acid in the range of about 5 to about 30 weight percent of the total solids of the coating composition. Amounts of acid approaching 30 weight percent can be used where moisture sensitivity of the coating is less of a concern. The coating composition should at least dry at a temperature less than 80°C and cure or have some degree of crosslinking at a temperature above around 70°C. The dried coating or dried film of the coating composition can be thermoplastic. Drying of the applied coating composition can involve treatment of the coating dispersion or solution to heat at a temperature of less than 80°C for a time of at least 5 to 10 seconds to a couple of minutes so that a coating of the dispersion or solution is essentially transparent (little if any haze) and dried to the touch. This is the type of coating that coats PET preforms and is able to stretch to achieve an coating on injected molded or blow molded containers with reduced permeability to carbon dioxide and/or oxygen over a given period of time. The amount of the dried coating on the preform can range from about 40 to about 500 milligrams ("mg") of the coating from at least a single pass in a flow coater or curtain wall coater. In applications even including coating preforms the amount of the coating on a substrate material can range from 40 to 1000 mg from at least one pass in a flow or curtain wall coater, but depending on the size and type of container not exceeding the weight of the uncoated container. Most suitably the amount of the coating on a substrate can range from 40 to 300 mg, and multiple passes in a flow or curtain wall coater can also be used. In coating applications for preforms, this amount also can depend on the size of bottle into which the preform is blow molded or blow formed. Larger bottle sizes have lower overall permeability of the gases across the bottle into and/or from the contained liquid and can have lowerr amounts of coating. The cured coating can also be thermoplastic from an amount of aminoplast in the composition of less than around 30 weight percent of the solids of the coating composition. Lower amounts of the aminoplast, around 30 weight percent and less, can result in increased flexibility from a thermoplastic dried coating.

Also additional additives can be present in the composition such as at least one defoaming agent typically an amount of less than 3 weight percent of the composition (solids and water). Other additional components that may be present in the composition include: one or more or combinations of any or all of the following: colorants, pigments, dyes, waxes, UV absorbers, UV-stabilizers, antioxidants, and other additives and modifiers typically used in coating compositions for food or beverage containers or packaging film wrappers and sheets.

### Detailed Description

In the description other than in the operating examples, or where otherwise indicated, all numbers expressing quantities of ingredients, reaction conditions, dimensions, physical characteristics, processing parameters and so forth used in the specification and claims are to be understood as being modified in all instances by the term "about". Accordingly, unless indicated to the contrary, the numerical values set forth in the following specification and claims may vary depending upon the desired properties sought to be obtained by the present invention. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 5.5 to 10.
Also, as used herein, the term "polymer" is meant to include oligomers and both homopolymers and copolymers. Furthermore as used herein, "film-forming" means that the film-forming resin(s) forms a self-supporting continuous film on at least a horizontal surface of the substrate upon at least drying at ambient or elevated temperature and also includes oligomeric or polymeric materials that upon removal of any solvents or carriers present in the polymer emulsion, dispersion, suspension or solution, can coalesce to form a film on at least a horizontal surface of the substrate and are capable of curing into a continuous film. For the purposes of this invention, the term "barrier polymer" means that the polymer exhibits barrier properties to carbon dioxide and/or oxygen over that of an uncoated plastic substrate such as poly(ethyleneterephthalate) [PET]. An example of such a barrier polymer is a polymer that has an oxygen transmission rate which is less than 5, preferably less than 2, most preferably less than 1, cm³-mil/100 in²-atmosphere (O₂)-day [cubic centimeters-mil/100 inch.² -atmosphere(O₂)-day]. The barrier improvement factor refers to permeability of the coated substrate to that of the uncoated substrate. These permeabilities can be measured by any method known to those skilled in the art such as the Mocon gas transmission tests. For example carbon dioxide permeabilities, i.e., CO₂ transmission rates through coating films like those for plastic films, composites, and/or laminates can be determined using a MULTITRAN 800 film permeation test system, available from Modern Controls ("MOCON") Inc. (Minneapolis, Minn.). This test involves gas sample analysis employing a thermoconductivity detector, and using helium as the carrier gas. Oxygen transmission measurements can be determined on film samples with a Mocon Oxtran 2/20 apparatus equipped with SL sensors. Data can be collected as a function of time and recorded in thickness normalized units: cc mil/100 in.² /atm day. Suitable oxygen transmission rates that are less than 2 cm.³ -mil/100 in.²-atm(O₂)-day would provide an effective resistance to permeability over time for many film coating applications. The moisture resistance properties of the dried coating as a film on packaging during exposure while a coated package is filled with material is measured by exposure testing over a set period of time to that filling material. For instance the coating film needs adequate resistance to alkaline material, carbonated beverages, acidic beverages, or alcoholic beverages if the coated container is filled with such materials. Adequate resistances in these areas would be that the coating is not degraded or deteriorated so that the permeability to oxygen and/or carbon dioxide for the coated bottle becomes closer to that of the uncoated container. Additionally the coated film needs appropriate resistance to any fluids encountered in processing of the coated bottle and filling of the coated bottle. For instance the coating film needs adequate resistance against any lubricants that might be used in such processing.

Also any numeric references to amounts, unless otherwise specified, are "by weight". The term "equivalent weight" is a calculated value based on the relative amounts of the various ingredients used in making the specified material and is based on the solids of the specified material. The relative amounts are those that result in the theoretical weight in grams of the material, like a polymer, produced from the ingredients and give a theoretical number of the particular functional group that is present in the resulting polymer. The theoretical polymer weight is divided by the theoretical number to give the equivalent weight. For example, hydroxyl equivalent weight is based on the equivalents of reactive pendant and/or terminal hydroxyl groups in the hydroxyl-containing polymer.

As used herein, the term "cure" as used in connection with a composition, e.g., "a cured composition," shall mean that at least a portion of the crosslinkable components which form the composition are at least partially crosslinked. In certain embodiments of the present invention, the crosslink density of the crosslinkable components, i.e., the degree of crosslinking, ranges from 5% to 100% of complete crosslinking. One skilled in the art will understand that the presence and degree of crosslinking, i.e., the crosslink density, can be determined by a variety of methods, such as dynamic mechanical thermal analysis (DMTA) using a TA Instruments DMA 2980 DMTA analyzer conducted under nitrogen. This method determines the glass transition temperature and crosslink density of free films of coatings or polymers. These physical properties of a cured material are related to the structure of the crosslinked network. In certain embodiments of the present invention the cross link density can be low enough to allow the blow molding of PET preforms coated with the dried coating of the present invention into container bottles with the dried coating still covering the bottle where it was applied to the preform with minimal cracking of the dried film coating. In another embodiment of the present invention not involving preform blow molding applications the cross link density can be higher than that for the preform blow molding application to provide a higher degree of resistance to carbon dioxide and/or oxygen and/or moisture.

As used herein, spatial or directional terms in regards to the position of the coating film on a material or substrate, such as "left", "right", "inner", "outer", "above", "below", "top", "bottom" "over", "on", and the like have their standard dictionary meanings. However, it is to be understood that the invention may assume various alternative orientations and, accordingly, such terms are not to be considered as limiting. Further, as used herein, the terms "deposited over", "applied over", or "provided over" mean deposited or provided on but not necessarily in surface contact with. For example, a coating "deposited over" a substrate does not preclude the presence of one or more other coating films of the same or different composition located between the deposited coating and the substrate.

In the present specification and claims, the term "hydroxyl functionality" is employed to designate the presence of the hydroxyl chemical group (--OH). As used herein, "formed from" denotes open, e.g., "comprising," claim language. As such, it is intended that a composition "formed from" a list of recited components be a composition comprising at least these recited components, and can further comprise other nonrecited components during the composition's formation. Also, as used herein, the term "reactive" refers to a functional group that forms a covalent bond with another functional group under conditions sufficient to cure the composition.

The crosslinkable film-forming coating composition of the present invention is comprised of at least water-containing, borne, or based coating composition with at least one water dispersion or solution of at least one polyetheramine. Non-exclusive examples of poly(hydroxy amino ethers) or polyetheramines and their dispersions or solutions or emulsions are shown in U.S. Patents 6,180,715; 5,834,078; 5275853; and 5,962,093 each incorporated herein by reference for their entire teachings. These hydroxy-functional polyetheramines can be thermoplastic, and generally are useful as the aqueous dispersion or solution of an acid salt of the polyetheramine. The polyetheramine has repeating units represented by the formula

: 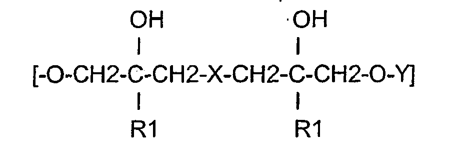 Wherein R1 in each occurrence is independently hydrogen or C1-C12 alkyl; Y is a hydrocarbylene moiety and X is: 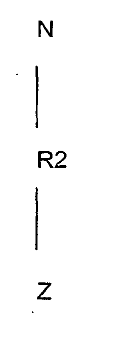 OR 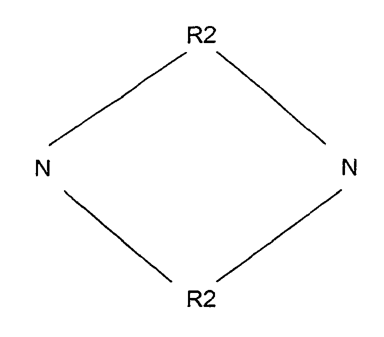 or 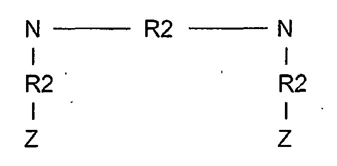 Where R2 is independently in each occurrence C2-C20 hydrocarbylene and Z is independently in each occurrence H, alkylamido, hydroxyl, alkoxy, alkylcarbonyl, aryloxy, arycarbonyl halo, or cyano. The hydroxy-functional polyetheramine can be prepared by contacting a diglycidyl ether of a dihydric phenol with an amine having only two hydrogens under conditions sufficient to form the polyetheramine. The presence of a secondary or tertiary amine end group, as opposed to a glycidyl end group, assists in providing a true thermoplastic polymer that is even melt-stable under usual melt processing conditions. For purposes of this invention, "hydrocarbyl" is a monovalent hydrocarbon such as alkyl, cycloalkyl, aralkyl, or aryl and "hydrocarbylene" is a divalent hydrocarbon such as alkylene, cycloalkylene, aralkylene or arylene. Conditions conventionally employed in the reaction of diglycidyl ethers with amines to form amine linkages and pendant hydroxyl groups are suitably employed in preparing these resins. Examples of such suitable conditions are set forth in U.S. Pat. No. 3,317,471, which is hereby incorporated by reference in its entirety. In general, however, the process for preparing the polymers including the copolymers is carried out so that the unreacted epoxy groups in the finished polyether are minimized. By minimizing the epoxy groups in the polyetheramine, the essential thermoplastic character of the polyetheramine can be retained. In the preparation of copolymers, a dihydric phenol is employed in addition to the amine. In such copolymerizations, while it is possible to subject a mixture of the diglycidyl ether(s), amine(s) and dihydric phenol(s) to copolymerization conditions, it is sometimes desirable to employ a staged addition procedure wherein the dihydric phenol is added before the amine is introduced or after essentially all of the amine has reacted with the diglycidyl ether. In the preparation of the copolymers wherein the reaction of dihydric phenol with diglycidyl ether is desired, conditions are employed to promote such reactions such as described in U.S. Pat. No. 4,647,648, which is hereby incorporated by reference in its entirety.

Examples of hydroxy-functional polyetheramines are those in the marketplace from Dow Chemical Company under the trademark of Blox^{®} 1000 and 4000 Series materials. These polyetheramines can be prepared into a dispersion or emulsion in a manner similar to that described in U.S. Patent 6,180,715, which is hereby incorporated by reference in its entirety.

Film-forming coating compositions of the present invention further comprise an aminoplast material to function as a crosslinking agent containing methylol ether groups. Aminoplasts are obtained from the reaction of formaldehyde with an amine or amide or with amino- or amino-group-carrying substances, and the reaction products can be condensates, oligomers, or resins. The most common amines or amides are melamine, urea, dicyandiamide, or benzoguanamine, and these are preferred; however other amines including, but not limited to, triazines, triazoles, diazines, guanidines, or guanamines can be used Condensates with other amines or amides include; for example, aldehyde condensates of glycoluril, which give a high melting crystalline product. -. While the aldehyde used is most often formaldehyde, other aldehydes such as acetaldehyde, crotonaldehyde, and benzaldehyde may be used. Generally the aminoplast can contain imino and/or methylol groups; for instance, at least a portion of the methylol groups can be etherified with an alcohol to modify the cure response. Any monohydric alcohol may be employed for this purpose including methanol, ethanol, n-butyl alcohol, isobutanol, and hexanol, with methanol, n-butyl alcohol and isobutanol being preferred. Non-exclusive examples of suitable aminoplasts include: melamine-, urea-, or benzoguanamine-formaldehyde condensates, such as the monomeric materials that are at least partially etherified with one or more alcohols containing from one to four carbon atoms. Also the methylol groups can be fully etherified with at least one alcohol selected from the group consisting of methanol, n-butanol, and isobutanol. Partially etherified aminoplasts are more suitable in yielding the more flexible type of coating film for thermoplastic coatings. Non-limiting examples of suitable aminoplast resins include monomeric or polymeric melamine formaldehyde resins, including melamine resins that are partially or fully alkylated using alcohols that have one to six carbon atoms, such as hexamethoxy methylated melamine; urea-formaldehyde resins including methylol ureas and siloxy ureas such as butylated urea formaldehyde resin, alkylated benzoguanimines, guanyl ureas, guanidines, biguanidines, polyguanidines, and the like. A suitable aminoplast is available from Solutia Inc. under the trademark RESIMENE 751, as a highly monomeric fully alkylated melamine etherified with both methanol and n-butanol. Alternatively, the aminoplast is preferably at least partially etherified with isobutanol. Another suitable aminoplast is available from CYTEC Industries as CYMEL 1161material. The aminoplast can be present in the coating composition for film-forming in amounts of about 1 to about 50, suitably 15 to about 45, suitably about 1 to about 35 percent by weight based on the total weight of resin solids in the coating composition for film-formation. Most suitably for formation of a flexible film on preforms for blow molding bottles the amount of aminoplast, such as a melamine formaldehyde condensate or Cymel 385 material, is from about 0.5 to about 10 more suitably 1 to 8 weight percent of the total weight of resin solids in the coating composition. Suitable melamine resins include commercial grade hexamethoxymethylmelamines such as, for example, CYMEL 303 crosslinking agent, a product of Cytec is suitable where higher temperature curing reactions are needed and available.

Aminoplasts with high imino and high methylol content are more suitable for lower temperature crosslinking reactions or curing. Also water solubility is preferential for ease of incorporation of the aminoplast into water borne coating compositions. Higher degrees of etherification are more suitable for higher temperature crosslinking reactions or curing applications. Faster curing reactions work best in producing thermoplastic coating films. Generally aminoplasts with the below-presented chemical functionality have a decreasing rate of reactivity from (A) to (C). For (B) this functionality is pending from the aminoplast, while for (C) 6 of these groups are available in the Cymel 303 material.

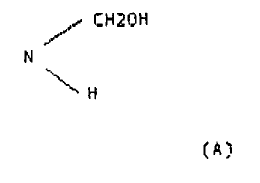

- R - OH (B)

CH2O - CH3 (C)

As described above, the waterborne coating composition preferably has a water-soluble cross-linker. Preferably, this water-soluble cross-linker is an aminoplast resin that is reactive with the hydroxyl groups of the aqueous polyetheramine dispersion. The preferred water-soluble cross-linker is commercially available from Cytec Industries Inc. as Cymel^{®} 327 material. One suitable water-soluble aminoplast cross-linker has a non-volatile weight percent in the range of 85 to 95 percent and a viscosity of 10 to 75 dPa·s. The water-soluble cross-finker having these characteristics improves the sprayability of the waterborne coating composition. If the waterborne coating composition has too high a viscosity, the waterborne coating composition will not be able to be applied using standard application equipment. It is preferable in many instances to employ precursors of aminoplasts such as hexamethylol melamine, dimethylol urea, and their etherified forms, i.e., modified with alkanols having from one to four carbon atoms. Hexamethoxymethyl melamine and tetramethoxy glycoluril exemplify said etherified forms. Particularly preferred are the amino cross-linking agents sold by Cytec Industries Inc. under the trademark CYMEL. In particular, the CYMEL 301, CYMEL 303, and CYMEL 385 alkylated melamine-formaldehyde resins are useful. Of course, it is possible to use mixtures of any or all of the above N-methylol products.

Aminoplast material, crosslinking, or curing agents are generally provided for the more thermosetting applications in an amount sufficient to react with around at least one-half the hydroxyl groups of the polyetheramine, i.e., at least one-half the stoichiometric equivalent of the hydroxyl functionality. The cross-linking agent can be sufficient to substantially completely react with all of the hydroxyl functionality of the polyetheramine, and cross-linking agents having nitrogen cross-linking functionality are provided in amounts of from about 2 to about 12 equivalents of nitrogen cross-linking functionality per equivalent of hydroxyl functionality of the polyetheramine. This typically translates to an aminoplast being provided at between greater than about 10 to about 70 parts per hundred parts of resin. Lesser amounts of aminoplast are generally used to produce thermoplastic coating films.

The film-forming coating composition may also contain catalysts to accelerate the cure of the aminoplast with reactive groups on the polymer. Examples of suitable catalysts are acidic materials and include acid phosphates and sulfonic acid or a substituted sulfonic acid such as dodecylbenzene sulfonic acid or paratoluene sulfonic acid. The catalyst when used may be present in an amount up to about 5.0 percent by weight, such as about 0.5 to about 1.5 percent by weight, based on the total weight of resin solids.

Optional ingredients such as, for example, colorant, pigments, dyes, wax, plasticizers, defoamers, surfactants, thixotropic agents, anti-gassing agents, organic cosolvents, flow controllers, anti-oxidants, UV light absorbers, UV stabilizers and similar additives conventional in the art may be included in the coating composition. These ingredients may be present at up to about 40% by weight based on the total weight of resin solids of the coating composition. When defoamers are used a useful amount is less than 3 weight percent of the coating composition (solids and water). Examples of defoaming agents or defoamers or anti-foaming agents of this type include one or more of: Air Products Surfynol materials, mineral oil, silicone defoaming agents. Suitable types of defoaming agents include silicone based defoamers, alcohols, glycol ethers, mineral spirits, Surfynol materials, acetylene diol based defoamers, polysiloxane, and any combinations of two or more of these. These defoamers can be present in an amount in the range of 0.01% to 2% for a flow coatable coating composition.

Defoaming agents that are essentially solvent free when used in an amount from 0.01 to 1 weight percent of composition formulation (solids + water) also are suitable. Although defoaming agent or defoamers or anti-foaming agents need not be solvent free to be suitable. Also in some cases higher levels are needed to achieve defoaming action but this higher amount needs to be balanced with any type of solvent used in the coating composition to avoid adverse affects. A particularly suitable defoamer is one having a combination of siloxane glycol, organosiloxane, and reaction product of silicon dioxide and organosiloxane polymer. Also suitable is one having in weight percent of the solids of the defoamer 55 polyglycol, 30 to 40 organosiloxane and the remainder siloxane glycol. Defoamers that are suitable are those available from DOW CORNING Dow Corning Corporate Center, Midland, Michigan, U.S.A. which include: Antifoam FG-10 Emulsion; Antifoam H-10 Emulsion; Antifoam Y-30 Emulsion; 200^{®} Fluid; 544 Antifoam Compound; FS- 1265 Fluid; Antifoam 1400 Compound Antifoam 1410 Emulsion; Antifoam 1430 Emulsion; Antifoam 1510-US Emulsion Antifoam 1520-US Emulsion; Antifoam 2200; Antifoam 2210; 7305 Antifoam; Q2- 2617 Diesel Antifoam; Q2- 2647 Diesel Antifoam; Q2- 2677 Diesel Antifoam; Q2- 2600 Diesel Antifoam; Antifoam A Compound; Antifoam AF Emulsion; Antifoam B Emulsion; Antifoam C Emulsion; 2-3436 ANTIFOAM COMPOUND; 2-3522 ANTIFOAM COMPOUND; 2-3896 ANTIFOAM COMPOUND; 2-3898 ANTIFOAM COMPOUND; 2-3899 ANTIFOAM COMPOUND; 2-3900 ANTIFOAM COMPOUND; 2-3902 ANTIFOAM COMPOUND; 2-3911 ANTIFOAM; 2-3912 ANTIFOAM; 3160 ANTIFOAM COMPOUND; ANTIFOAM 1400; ANTIFOAM 1500; ANTIFOAM A COMPOUND; ANTIFOAM A COMPOUND - FOOD G RADE; Q2-4128 ANTIFOAM. Defoamers that are suitable that are available from LUBRIZOL Corporation Wickliffe, Ohio include: Foam Blast^{®} RKA and Foam Blase^{®} RKB defoamers. Defoamers that are suitable that are available from BYK-Chemie USA Inc. of 524 South Cherry Street, P.O. Box 5670, Wallingford, CT 06492-7651 Website: http://www.byk-chemie.com include: BYK^{®}-052; BYK^{®}-057; BYK^{®}-066 N; BYK^{®}-088; BYK^{®}-354; BYK^{®}-392; BYK^{®}-031; BYK^{®}-032; BYK^{®}-033;. BYK^{®}-034; BYK^{®}-035; BYK^{®}-036; BYK^{®}-037; . BYK^{®}-038; BYK^{®}-017; BYK^{®}-018; BYK^{®}-019; BYK^{®}-020; BYK^{®}-021; BYK^{®}-022; BYK^{®}-023; BYK^{®}-024; BYK^{®}-025; BYK^{®}-028 A; BYK^{®}-044; BYK^{®}-045; BYK^{®}-060 N; BYK^{®}-065; BYK^{®}-066 N; BYK^{®}-067 A; BYK^{®}-070; BYK^{®}-071; BYK^{®}-080 A; BYK^{®}-088; BYK^{®}-094; BYK^{®}-141; BYK^{®}-1610; BYK^{®}-1615; BYK^{®}-1650; BYK^{®}-1660; Byketol^{®}-WS; BYK^{®}-011; BYK^{®}-012; BYK^{®}-051; BYK^{®}-052; BYK^{®}-053; BYK^{®}-055; BYK^{®}-057; BYK^{®}-A 500; BYK^{®}-A 501; and BYK^{®}-A 530 defoamers. Defoamers that are suitable that are available from Tego Chemie Service GmbH a business unit of the Degussa AG, Tego Chemie Service GmbH, Goldschmidtstr. 100, 45127 Essen, Germany; Degussa Tego Coating and Ink Additives, 1111 South 6th Avenue, P.O. Box 1111, Hopewell, VA 23838, USA include: TEGO® Foamex 3062, TEGO® Foamex 8050, TEGO® Foamex K 3, TEGO® Foamex 1488, TEGO® Foamex 7447, TEGO® Foamex 800, TEGO® Foamex 805, TEGO® Foamex 808, TEGO® Foamex 815, TEGO® Foamex 822, TEGO® Foamex 825, TEGO® Foamex 845, TEGO® Foamex 1495, TEGO® Foamex 8030, TEGO® Foamex 810, TEGO@ Foamex 830, TEGO® Foamex 832, TEGO® Foamex 835, TEGO® Foamex 840, and TEGO® Foamex 842 defoamers.

With the low VOC of the coating composition with the Blox® polyetheramine, an effective defoamer is one that will not adversely affect coating flow-out, sheeting and coverage capability. As with the aforementioned defoamers additional defoamers that are effective in eliminating foams in such situations include: products from Lubrizol such as Antibubble DF-123, DF-125 and DF-162; Dee-Fo PI-4, PI -215, and PI-40 from Ultra Additive; Patcote 858, 525, and 519 from Patco; Dow Corning additive 65 and 62 from Dow Corning; BYK-028A, BYK-022, BYK-019 from BYK-Chemie; and Foamstar A-032 and A-038 from Cognis. Several solvents also can be used as defoamers such as ethanol, iso-propanol, methyl isobutyl ketone (MIBK), acetone, tert-butyl acetate and mineral alcohols. The percentage of the defoamers from 0.01% to 2% and particularly from 0.01% to 0.5% based on total formulation weight can be effective with the exact percentage depending upon the particular effectiveness of the particular defoaming agent in the situation. Also it is possible to pre-blend the defoamer in the water-soluble crosslinker such as Cymel 385 to aid the incorporation process and reduce variability in the addition levels. A suitable pre-blend ratio would be a 1:1 to about 1:20 more suitably around 1/10 ratio of defoamer to aminoplast.

The coating composition can be prepared by art recognized methods of preparing polyetheramine containing compositions. Also the preparation can be in accordance with the general principles discernable from the below-presented examples.

The coating composition of the present invention also has a carrier to form an emulsion, dispersion, or solution. The carrier is preferably a liquid medium. The carrier need not be added just as a separate component to the coating composition, but can also be added as part of the other components for the coating composition. For instance the polyetheramine with the acid in the water borne medium can be diluted or the existing water and any co-solvents with the polyetheramine can also be part of the carrier for the coating composition. The preferred carrier allows for easy application of the coating formulation onto substrates, but can be removed as needed under processing conditions. With the coating composition preferably a water borne composition the majority of the carrier is water. However other organic solvents preferably those that are water miscible can be used as one or more co-solvents as is known to those skilled in the art of water borne coating compositions. The coating composition of the present invention contains total solids present in a weight that ranges from about 10 to about 45 weight percent of the total coating composition. More suitably the total solids can range from about 25 to about 35 weight %. The carrier can make up the remainder, although other components can be present that could add to the solids content and reduce the carrier content.

The coating compositions of the present invention can be applied onto or to various materials as substrates such as polymeric materials or containers used for packaging. The coating compositions of the present invention can be applied to conventional packaging materials and containers, such as polyolefin, polyethylene, polycarbonate, or polyester like poly(alkylene terephthlate). Polymeric materials such as polycarbonates and polyolefins are known to be very gas permeable. Gas permeable polymeric materials generally have limited use as packaging for oxygen sensitive foods, beverages, or medicines. Nonexclusive examples of such polymeric packaging materials such as PET bottles. Suitable polyesters for substrates for the coating composition in a blow molding process include polyethylene terephthalate (PET) and its copolymers in the intrinsic viscosity (I.V.) range of about 0.5 to about 1.2 dl/g, more preferably in the I.V. range of from about 0.6 to about 1.0 dl/g and most preferably in the I.V. range of from about 0.7 to about 0.9 dl/g. Also polyolefins can be coextruded with the PET for blow molding such as polymers of alpha-olefin monomers having from about 2 to about 6 carbon atoms, and includes homopolymers, copolymers (including graft copolymers), and terpolymers of alpha-olefins and the like. Examples of such homopolymers nonexclusively include ultra low density (ULDPE), low density (LDPE), linear low density (LLDPE), medium density (MDPE), or high density polyethylene (HDPE); polypropylene; polybutylene; polybutene-1; poly-3-methylbutene-1; poly-pentene-1; poly-4-methylpentene-1; polyisobutylene; polyhexene and the like. Such polyolefins may have a weight average molecular weight of from about 1,000 to about 1,000,000, and preferably of from about 10,000 to about 500,000. Preferred polyolefins include polyethylene, polypropylene, polybutylene and copolymers, and blends thereof. The most preferred polyolefins include polyethylene and polypropylene. Of course these polymers can also be coated with the coating composition of the present invention for other applications.

Also other polymers can be coated for other packaging applications. For example suitable copolymers of ethylene and vinyl alcohol suitable for use in the present invention can be prepared by the methods disclosed in U.S. Pat. Nos. 3.510,464; 3,580,461; 3,847,845; and 3,585,177. Non-limiting examples of other optional polymers which can be used are disclosed in U.S. Pat. Nos. 5,055,355; 3,510,464 3,560,461; 3,847,845; 5,032,656; 3,585,177; 3,595,740; 4,284,674; 4,058,647; and 4,254,169. All of which are hereby incorporated by reference in their entirety.

Conventional methods for applying the coating composition of the present invention to substrates include spraying, rolling, dipping, brushing, flow coating, curtain wall coating, and related techniques. In these coating techniques, the coating compositions are dispersed or dissolved in a carrier and may be coated onto plastic "preforms." A preform refers to art recognized plastic objects that are designed to be blow molded. The blow molding process involves injection molding plastic objects from which containers or bottles are blow molded. A typical preform is a hollow piece of plastic that has the desired mass of the bottle that will be formed upon blow molding. Typically, the preform is placed in a mold and heated. Pressurized air is blown into the hollow portion of the preform. The preform expands to fit the dimensions of the mold to form the bottle or container. Coating of preforms is an advantageous manner of applying a coating for formed bottles or packaging because the method is more efficient in terms of coating material. Coating preforms is also preferred over coating bottles or containers because it is less expensive and more efficient from production and transportation standpoints.

In the dip coating process, a plastic material, container, or preform is dipped into the coating composition. The application viscosity of the coating composition should be greater than that for a free moving material, such as water. This is to ensure that the desired amount of the coating composition is coated onto the plastic material, container, or preform. Yet the application viscosity of the coating composition typically must also be less than that for a syrupy material such as molasses. This is to ensure application ease and speed. Typically the viscosity of the coating composition for dip coating application will range from about 1 to 20 poise (dPa·s) at 25 degree. C. more suitably from about 2 to 15 dPa·s at 25 degree. C. and most suitably from about 3 to 10 dPa·s at 25 degree. C.

Another method of producing substrates or articles coated with the coating composition of the present invention is by spray coating. In this method, the substrate such as PET preforms are sprayed with coating composition that may have a slightly higher content of carrier. The spraying can be done manually or by use of an apparatus which provides for spraying and post-spray treatment in one machine.

Another method of coating is flow coating for which the objective is to provide a sheet of material, similar to a falling shower curtain or waterfall, that the substrate such as preforms passes through for thorough coating. Suitable methods of flow coating allow for a short residence time of the substrate in the coating composition. The substrate need only pass through the sheet for a period of time sufficient-to coat the surface. The substrate depending on its shape and size can pass through the sheet at any orientation that favors the desired degree of coating. For instance if the substrate is a plurality of preforms, they can be rotated as they pass through the sheet of coating composition. In a conventional flow coater the substrate like a plurality of preforms enter on a conveyor or the like in rows or some other suitable arrangement to maximize the number of preforms contacting the sheet at the same time. The preforms proceed to the flow coater wherein they pass through the waterfall or sheet of the coating composition. The coating composition can be supplied from a tank or vat from which it flows through a gap exit in the tank down a fluid guide where it forms a waterfall as it passes onto the preforms. The gap exit from in the tank may be expanded or contracted to adjust the flow of the coating composition. The coating composition can be pumped from a reservoir into the vat or tank at a rate that maintains the coating composition level above that of the gap exit. Such a configuration ensures a constant flow of coating composition.

In any of the coating operations a substrate such as a preform is coated to the desired extent. For instance for a substrate such as the preform, which has a neck section and a body section, the body section can be coated while the neck section remains uncoated. The coating composition is applied in at least one layer and possibly as multiple layers on or about the entire surface of the body section. Such an application allows for a dried coating film layer that either terminates at the bottom of the preform or that can also cover the bottom of the preform. The coating composition need not extend to the neck section, nor need it be present on the interior surface of the preform. Any multiple layers of the coating film would result from multiple applications of the coating composition. For instance in dip coating application, multiple layers would result from more than one dipping and drying of the applied coating composition. For flow coater application multiple film layers would result from multiple passes through the flow coater..

The coated plastic materials, containers, or preforms are then dried, e.g., in an oven.
Drying occurs at a functional temperature less than the functional temperature at which the coating degrades, and preferably operates to drive off the carrier solvent. For instance were the carrier includes polar solvents or mixtures of polar solvents (e.g., a mixture of water and a polar organic compound such as acetone, the carrier is driven off during drying. Also the desired degree of crosslinking from the presence of the aminoplast is effected.

The dried film of the coating composition of the present invention with the aforedescribed components can have a glass transition temperature ("Tg") that is similar to the substrate that it is coating and optionally can also have a tensile strength and creep resistance that is similar to the material of the substrate. For instance when the substrate is a PET preform for blow molding, the similar Tg of the coating film and the PET allows the blowing temperature range for both to be similar, Such a coated PET preform can have a blowing temperature that allows both materials to be processed within their preferred blowing temperature ranges so that during blow molding the coated preform behaves as if it were made of one material, expanding smoothly and creating a cosmetically appealing container with a more even thickness and more uniform coating where it is applied.

### EXAMPLES:

### Example 1 (phosphoric acid version of polyetheramines):

Deionized water (1095 g) was added to a 3000 ml reaction flask equipped with an overhead stirrer, nitrogen inlet, condenser and temperature controller. The mixture was heated to 45°C under continuously stirring and 500 g of BLOX polymer having a mole percent of RDGE of greater than 40 was slowly added to the flask. After the mixture was heated to 50°C, 85% phosphoric acid (72 g) was added to the flask. The agitation speed was increased accordingly to prevent polymer from adhering to the flask wall. The mixture was heated to 97°C and held for three hours. The reaction mixture was slowly cooled to 90°C. The viscosity decreased as temperature dropped. There was one phase transition around 90°C. The polymer solution was transformed to water dispersion. Agitation speed was further reduced to prevent foaming when the reaction mixture was cooling down to room temperature.

### Example 2 (Coating Composition with phosphoric acid version of polyetheramines made under higher Pressure):

Deionized water 20.87kg was added to a 10 gallon steel reactor equipped with an overhead stirrer, nitrogen inlet, condenser and temperature controller. The mixture was heated to 55°C under continuously stirring and 13.61kg BLOX polymer having a mole percent of resorinoldiglycidyl ether ("RDGE") of greater than 40 was slowly added to the reactor. After the mixture was heated to 60°C, 85% phosphoric acid 1.36kg was added to the reactor. The agitation speed was increased accordingly to prevent polymer from adhering to the reactor wall. The reactor was sealed and then heated with continuous mixing to 125°C over a period of about 60 minutes. The temperature was maintained at 125°C for another 90 minutes. The reactor was monitored very carefully to prevent reflux during the holding period. As soon as the reactor began to reflux, the temperature was reduced until refluxing stopped. After the 90 minutes hold, heating was turned off to let reactor cool down to 90°C. Pressure was slowly reduced during the cooling. The viscosity decreased as temperature dropped. There was one phase transition around 90°C, The polymer solution was transformed to water dispersion. Agitation speed was further reduced to prevent foaming when the reaction mixture was cooling down to room temperature.

The Phosphoric acid based Blox 5000 polyetheramine gives the good barrier, water/coca or water/cola resistance and flexibility. This polyetheramine can have a quantity of crosslinker from 0.5 to 5.0% based on solids. Also the crosslinker was pre-diluted with deionized water before the addition of Blox 5000 to the dispersion in order to assist in minimizing any localized colloidal destabilization. As crosslinker level is increased, the water and coca resistance improves with some degeneration of flexibility and/or elasticity. The crosslinker amount of this example balances these two properties to achieve performance in water/coca resistance and bottle blowing capabilities. If the system is,overly cross-linked, when the preforms are blown into bottles, various degrees of cracking and crack propagation/delamination would be evident. Such cracks generally occur in a horizontal orientation and go around the circumference of the bottle in areas of the greatest expansion. In order to keep the crosslinker at lower levels and allow greater flexibility, infrared cure times/ intensities can be adjusted.

Compositions like those of this example with 30-40% Blox polymer; 1.0-3.0% Cymel 385, which is pre-diluted in water in a 1/1 ratio; 0.01-0.04% defoamer that is pre-blended in crosslinker Cymel 385 in a 1/10 ratio gives good performance in resistance properties and flexibility/elasticity.

Coating compositions with the polyetheramine formulation of Example 1 or the coating composition of Example 2 can be spray coated onto preforms or preforms can be passed through a curtain wall of such coating compositions to apply the coating compositions. For example preforms of 20 ounce (600 milliliter) PET bottles are coated with the coating composition in by passage through a curtain wall yielding coated preforms. The coating polymer is then dried. The heating temperatures will generally be lower than the temperature at which film of the coating composition undergoes discoloration, distortion, or degradation. Generally, the coating polymer can be dried by heating at temperatures of from about 35 to about 160.degree. C., preferably from about 70 to about 150.degree. C., and most preferably from about 104 to about 127.degree. C. Drying times depend generally on the viscosity of the coating composition and the rate of passage of the substrate through the curtain wall.

As with the composition of example 2 drying is occurs with baking conditions including 7 lamps. In a typical bake, The lamp intensity is set up between 50-65% and an exposure time is around 15-30 seconds. The longer time and higher intensity would soften the pre-form PET bottles. The shorter time and lower intensity would give poorer water and coca resistance, especially on two coat applications. This process gives rise to plastic materials, containers, or preforms coated with a layer of the coating composition. The coating film can has an average oxygen permeability constant (OPC) of about 0.015 to 8.0 cc-mil/day/650 cm.sup.2 /atm and an average carbon dioxide permeability constant (CO.sub.2 PC) of about 0.10 to 20 cc-mil/day/650 cm.sup.2 /atm.

## Claims

1. A curable polymeric containing water based coating composition, comprising:
a) at least one water dispersion or solution of poly(hydroxy amino ethers) or polyetheramines prepared by contacting one or more of the diglycidyl ethers of a dihydric phenol with a difunctional amine under conditions sufficient to cause the amine moieties to react with epoxy moieties to form a polymer backbone having amine linkages, ether linkages and pendant hydroxyl moieties solubilized with one or more protic or aprotic acids in an amount in the range of about 1 to about 30 weight percent based on solids;
b) at least one water dispersible or solubilzable aminoplast in an amount up to 50 weight percent of the solids of the coating composition.

2. Coating composition of Claim 1 wherein the aminoplast is melamine formaldehyde alkyl ether.

3. Coating composition of Claim 1 wherein the amount of the polyether amine is in the range of 50 to less than 100 weight percent of the total solids of the coating composition.

4. Coating composition of Claim 1 wherein the acid is present in an amount in the range of about 7 to about 20 weight percent of the total solids of the coating composition.

5. Coating composition of Claim 1 wherein the aminoplast is present in an amount in the range of up to 30 weight percent solids of the coating composition.

6. Coating composition of Claim 1 wherein the poly(hydroxy amino ethers) is comprised of one or more of the diglycidyl ethers of a dihydric phenol having up 80 mole percent of the ethers of resorcinol diglycidyl ether.

7. Coating composition of Claim 1 wherein the dried coating is thermoplastic, wherein drying involves treatment of the coating dispersion or solution to heat at a temperature of less than 80°C for a time of at least 5 to 10 seconds to a couple of minutes so that a coating of the dispersion or solution is essentially transparent and dried to the touch.

8. Coating composition of claim 1, wherein the dried coating is thermoplastic from an amount of aminoplast of less than 30 weight percent of the solids of the coating composition.

9. Coating composition of Claim 1 which also comprises a defoamer in an amount of less than 3 weight percent of the composition inclusive of both solids and water.

10. Coating composition of Claim 9 wherein the defoamer is essentially solvent free and in an amount from 0.01 to 1 weight percent of the composition inclusive of both solids and water.

11. Coating composition of Claim 1 which also comprises at least one additional component selected from colorants, pigments, dyes, UV absorbers, UV-stabilizers, antioxidants, and waxes.

12. Coating composition of Claim 1 which includes a carrier selected from at least water and water and cosolvents.

13. Coating composition of Claim 1 where in the_crosslink density of the crosslinkable components as degree of crosslinking, ranges from 5% to 100% of complete crosslinking.

14. Coating composition of claim 1, wherein the dried coating is thermoplastic from an amount of aminoplast of less than 10 weight percent of the solids of the coating composition.

15. A non-metallic and non-glass substrate selected from poly(alkyleneterephthlate) and polyolefins having the dried residue of the coating composition of claim 1.

16. A plastic substrate selected from poly(alkyleneterephthlate) and polyolefins having the dried residue of the coating composition of claim 8.

17. The coated substrate of Claim 15 which is a preform for blow molding into a plastic container, where the blown coated container has a a barrier properties to carbon dioxide and oxygen better than those for the blown uncoated container.

18. The coated substrate of Claim 16 having 40 to 1000 milligrams of the coating from at least a single pass in a flow coater or curtain wall coater.

19. The coated substrate of Claim 16 having 40 to 500 milligrams of the coating from at least a single pass in a flow coater or curtain wall coater.

20. The coated substrate of Claim 16 having 40 to 300 milligrams of the coating from at least a single pass in a flow coater or curtain wall coater.

21. The coated substrate of Claim 11 selected from the group of films and blow molded plastic containers, .paper, and paper board.

22. A plastic substrate selected from poly(alkyleneterephthlate) and polyolefins having the cured residue of the coating composition of claim 1 wherein the coated plastic has barrier properties to carbon dioxide and oxygen better than the uncoated plastic and the coating has at least one property selected from water resistance, moisture resistance, line lubricant resistance acid resistance, alkaline resistance, carbonated beverage resistance, acidic beverage resistance, and alcoholic beverage resistance for up to around 15 minutes at ambient conditions or ice water resistance for 2 to 24 hours.

23. A curable polymeric containing water based coating composition, comprising:
a) at least one water dispersion or solution of poly(hydroxy amino ethers) or polyetheramines prepared by contacting one or more of the diglycidyl ethers of a dihydric phenol with a difunctional amine under conditions sufficient to cause the amine moieties to react with epoxy moieties to form a polymer backbone having amine linkages, ether linkages and pendant hydroxyl moieties having an amount of resorcinol diglycidyl ether of from about 20 to about 80 mole percent of the diglycidyl ethers, wherein the polyetheramine is present in an amount of 50 to less than 100 weight percent of the total solids of the coating composition solubilized with one or more protic or aprotic acids selected from the group consisting of phosphoric and lactic acids and combinations thereof in an amount of about 5 to 30 weight percent based on solids;
b) at least one water dispersible or solubilzable melamine formaldehyde alkyl ether in an amount up to 30 weight percent of the solids of the coating composition

24. The coating composition of Claim 23 which includes a defoamer selected from the group of silicone based defoamers, alcohols, glycol ethers, mineral spirits, Surfynol, acetylene diol based defoamers polysiloxane, and any combinations of two or more of these in an amount in the range of 0.01% to 2% for a flow coatable coating composition.

25. The coating composition of Claim 24 wherein the defoamer is a combination of siloxane glycol., organosiloxane, and reaction product of silicon dioxide and organosiloxane polymer.

26. The coating composition of Claim 25 wherein the defoamer has in weight percent of the solids of the defoamer 55 polyglycol, 30 to 40 organosiloxane and the remainder siloxane glycol.

27. The coating composition of Claim 23 wherein the aminoplast is melamine formaldehyde alkyl ether in an amount in the range of about 0.5 to about 8 weight percent of the total solids of the coating composition.

28. The coating composition of Claim 23 wherein the amount of resorcinol diglycidyl ether in the polyetheramine is in the range of from about 50 to about 60 mole percent of the diglycidyl ethers.

29. The coating composition of Claim 23 which includes a carrier and wherein the total solids of the composition is in the range of 10 to 45 weight percent.

30. Plastic substrate selected from the group of polyalkyleneterephthlate and polyolefin having the dried cured coating from the coating composition of claim 23.

31. Coated plastic substrate of claim 20 wherein the substrate is selected from polyethyleneterephthlate, polypropylene, paper or paperboard.

## Patentansprüche

1. Härtbare polymerhaltige Beschichtungszusammensetzung auf Wasserbasis, die aufweist:
a) wenigstens eine Wasserdispersion oder -lösung von Poly(hydroxyaminoethern) oder Polyetheraminen, hergestellt durch Umsetzen von einem oder mehreren der Diglycidylether eines zweiwertigen Phenols mit einem difunktionellen Amin unter Bedingungen, die ausreichen, um zu bewirken, dass die Amineinheit mit den Epoxyeinheiten unter Bildung eines Polymerrückgrats mit Aminbindungen, Etherbindungen und anhängenden Hydroxyleinheiten reagiren, solubilisiert mit einer oder mehreren protischen oder aprotischen Säuren in einer Menge im Bereich von etwa 1 bis etwa 30 Gewichtsprozent;
b) wenigstens einen wasserdispergierbaren oder solubilisierbaren Aminoplasten in einer Menge von bis zu 50 Gewichtsprozent der Feststoffe der Beschichtungszusammensetzung.

2. Beschichtungszusammensetzung nach Anspruch 1, wobei der Aminoplast Melamin-Formaldehyd-Alkylether ist.

3. Beschichtungszusammensetzung nach Anspruch 1, wobei die Menge des Polyetheramins im Bereich von 50 bis weniger als 100 Gewichtsprozent der Gesamtfeststoffe der Beschichtungszusammensetzung liegt.

4. Beschichtungszusammensetzung nach Anspruch 1, wobei die Säure in einer Menge im Bereich von etwa 7 bis etwa 20 Gewichtsprozent der Gesamtfeststoffe der Beschichtungszusammensetzung vorhanden ist.

5. Beschichtungszusammensetzung nach Anspruch 1, wobei der Aminoplast in einer Menge im Bereich von bis zu 30 Gewichtsprozent Feststoffe der Beschichtungszusammensetzung vorhanden ist.

6. Beschichtungszusammensetzung nach Anspruch 1, wobei die Poly(hydroxyaminoether) von einem oder mehreren der Diglycidylether eines zweiwertigen Phenols mit bis zu 80 Mol-Prozent der Ether von Resorcindiglycidylether gebildet werden.

7. Beschichtungszusammensetzung nach Anspruch 1, wobei die getrocknete Beschichtung thermoplastisch ist, wobei das Trocknen die Behandlung der Beschichtungsdispersion oder -lösung mit Wärme bei einer Temperatur beinhaltet, die geringer ist als 80°C, für eine Zeit von wenigstens 5 bis 10 Sekunden bis zu einigen Minuten, so dass eine Beschichtung der Dispersion oder -lösung im Wesentlichen transparent und berührtrocken ist.

8. Beschichtungszusammensetzung nach Anspruch 1, wobei die getrocknete Beschichtung thermoplastisch ist wegen einer Aminoplastenmenge von weniger als 30 Gewichtsprozent der Feststoffe der Beschichtungszusammensetzung.

9. Beschichtungszusammensetzung nach Anspruch 1, die ferner einen Entschäumer in einer Menge von weniger als 3 Gewichtsprozent der Zusammensetzung, einschließlich von sowohl Feststoffen als auch Wasser, umfasst.

10. Beschichtungszusammensetzung nach Anspruch 9, wobei der Entschäumer im Wesentlichen lösemittelfrei ist und in einer Menge von 0,01 bis 1 Gewichtsprozent der Zusammensetzung, einschließlich sowohl von Feststoffen als auch Wasser, vorliegt.

11. Beschichtungszusammensetzung nach Anspruch 1, die außerdem ferner wenigstens einen zusätzlichen Bestandteil umfasst, der ausgewählt ist aus Färbemitteln, Pigmenten, Farbstoffen, UV-Absorbern, W-Stabilisatoren, Antioxidantien und Wachsen.

12. Beschichtungszusammensetzung nach Anspruch 1, die einen Träger beinhaltet, der ausgewählt ist aus wenigstens Wasser und Wasser und Co-Lösemitteln.

13. Beschichtungszusammensetzung nach Anspruch 1, wobei die Vernetzungsdichte der vernetzbaren Bestandteile als Grad der Vernetzung im Bereich von 5% bis 100% der vollständigen Vernetzung liegt.

14. Beschichtungszusammensetzung nach Anspruch 1, wobei der getrocknete Überzug thermoplastisch ist aufgrund einer Menge an Aminoplasten von weniger als 10 Gewichtsprozent der Feststoffe der Beschichtungszusammensetzung.

15. Nicht-metallisches und nicht-gläsernes Substrat, das ausgewählt ist aus Poly(alkylenterephthalat) und Polyolefinen, mit dem getrockneten Rückstand der Beschichtungszusammensetzung von Anspruch 1.

16. Kunststoffsubstrat, das ausgewählt ist aus Poly(alkylenterephthalat) und Polyolefinen, mit dem getrockneten Rückstand der Beschichtungszusammensetzung von Anspruch 8.

17. Beschichtetes Substrat nach Anspruch 15, das eine Vorform für das Blasformen zu einem Kunststoffbehälter ist, wobei der blasgeformte Behälter Barriereeigenschaften gegenüber Kohlendioxid und Sauerstoff aufweist, die besser sind als die für den unbeschichteten geblasenen Behälter.

18. Beschichtetes Substrat von Anspruch 16 mit 40 bis 1000 Milligramm der Beschichtung aus wenigstens einem einzigen Durchgang durch einen Flutbeschichter oder eine Gießlackiervorrichtung.

19. Beschichtetes Substrat nach Anspruch 16 mit 40 bis 300 Millgramm der Beschichtung aus wenigstens einem einzigen Durchgang durch einen Flutbeschichter oder eine Gießlackiervorrichtung.

20. Beschichtetes Substrat nach Anspruch 16 mit 40 bis 300 Milligramm der Beschichtung aus wenigstens einem einzigen Durchgang durch einen Flutbeschichter oder eine Gießlackiervorrichtung.

21. Beschichtetes Substrat nach Anspruch 11, ausgewählt aus der Gruppe von Folien und blasgeformten Kunststoffbehältern, Papier und Karton.

22. Kunststoffsubstrat, das ausgewählt ist aus Poly(alkylenterephthalat) und Polyolefinen, das den gehärteten Rückstand der Beschichtungszusammensetzung von Anspruch 1 aufweist, wobei der überzogene Kunststoff Barriereeigenschaften gegenüber Kohlendioxid und Sauerstoff aufweist, die besser sind als die des unbeschichteten Kunststoffs, und wobei die Beschichtung wenigstens eine Eigenschaft aufweist, die ausgewählt ist aus Wasserbeständigkeit, Feuchtigkeitsbeständigkeit, Linienschmiermittel-Beständigkeit, Säurebeständigkeit, Basenbeständigkeit, Beständigkeit gegen ein karbonisiertes Getränk, Beständigkeit gegen ein saures Getränk und Beständigkeit gegen ein alkoholisches Getränk für bis zu etwa 15 Minuten bei Umgebungsbedingungen oder eine Eiswasserbeständigkeit für 2 bis 24 Stunden.

23. Härtbare polymerhaltige Beschichtungszusammensetzung auf Wasserbasis, die umfasst:
a) wenigstens eine Wasser-Dispersion oder -Lösung von Poly(hydroxyaminoethern) oder Polyetheraminen, hergestellt durch Umsetzen von einem oder mehreren der Diglycidylether eines zweiwertigen Phenols mit einem difunktionellen Amin unter Bedingungen, die ausreichen, damit die Amineinheiten mit den Hydroxyleinheiten unter Bildung eines Polymerrückgrats reagieren, das Aminbindungen, Etherbindungen und anhängende Hydroxyleinheiten aufweist, und das eine Menge an Resorcindiglycidylether von etwa 20 bis etwa 80 Mol-Prozent der Diglycidylether umfasst, wobei das Polyetheramin in einer Menge von 50 bis weniger als 100 Gewichtsprozent der Gesamtfeststoffe der Beschichtungszusammensetzung vorhanden ist, solubilisiert mit einer oder mehreren protischen oder aprotischen Säuren, die ausgewählt sind aus der Gruppe, die besteht aus Phosphor- und Milchsäure und Kombinationen davon in einer Menge von etwa 5 bis 30 Gewichtsprozent auf der Basis der Feststoffe;
b) wenigstens einen wasserdispergierbaren oder solubilisiebaren Melamin-Formaldehyd-Alkylether in einer Menge von bis zu 30 Gewichtsprozent der Feststoffe der Beschichtungszusammensetzung.

24. Beschichtungszusammensetzung nach Anspruch 23, die einen Entschäumer beinhaltet, der aus der Gruppe der Entschäumer auf Siliconbasis, Alkohole, Glykolether, Mineralsprit, Surfynol, Entschäumer auf Acetylendiolbasis, Polysiloxan und irgendwelcher Kombinationen von zwei oder mehr der genannten in einer Menge im Bereich von 0,01% bis 2% für eine per Gießbeschichtung auftragbare Beschichtungszusammensetzung.

25. Beschichtungszusammensetzung nach Anspruch 24, wobei der Entschäumer eine Kombination von Siloxanglykol, Organosiloxan und einem Reaktionsprodukt von Siliciumdioxid und Organosiloxapolymer ist.

26. Beschichtungszusammensetzung nach Anspruch 25, wobei der Entschäumer in Gewichtsprozent der Feststoffe des Entschäumers 55 Polyglykol, 30 bis 40 Organosiloxan und den Rest Siloxanglykol aufweist.

27. Beschichtungszusammensetzung nach Anspruch 23, wobei der Aminoplast Melamin-Formaldehyd-Alkylether in einer Menge im Bereich von etwa 0,5 bis etwa 8 Gewichtsprozent der gesamten Feststoffe der Beschichtungszusammensetzung ist.

28. Beschichtungszusammensetzung nach Anspruch 23, wobei die Menge an Resorcindiglycidylether in dem Polyetheramin im Bereich von etwa 50 bis 60 Mol-Prozent der Diglycidylether liegt.

29. Beschichtungszusammensetzung nach Anspruch 23, die einen Träger beinhaltet und wobei die Gesamtfeststoffe der Zusammensetzung im Bereich von 10 bis 45 Gewichtsprozent liegen.

30. Kunststoffsubstrat, das aus der Gruppe der Polyalkylenterephthalate und Polyolefine ausgewählt ist, das den getrockneten gehärteten Überzug aus der Beschichtungszusammensetzung von Anspruch 23 aufweist.

31. Beschichtetes Kunststoffsubstrat nach Anspruch 20, wobei das Substrat ausgewählt ist aus Polyethylenterephthalat, Polypropylen, Papier oder Karton.

## Revendications

1. Composition aqueuse de revêtement durcissable contenant un polymère, comprenant :
a) au moins une dispersion ou solution aqueuse de poly(hydroxyaminoéthers) ou de polyétheramines préparés en mettant en contact un ou plusieurs des éthers diglycidyliques d'un phénol dihydroxylique avec une amine difonctionnelle dans des conditions suffisantes pour provoquer la réaction des groupements amine avec les groupements époxy afin de former un squelette polymère ayant des liaisons amine, des liaisons éther et des groupements hydroxyle appendus, solubilisés avec un ou plusieurs acides protiques ou aprotiques, en une quantité comprise dans l'intervalle d'environ 1 à environ 30 % en poids sur la base des matières solides ;
b) au moins un aminoplaste dispersible ou solubilisable dans l'eau, en une quantité allant jusqu'à 50 % en poids des matières solides de la composition de revêtement.

2. Composition de revêtement suivant la revendication 1, dans laquelle l'aminoplaste est un éther alkylique de mélamine-formaldéhyde.

3. Composition de revêtement suivant la revendication 1, dans laquelle la quantité de la polyétheramine est comprise dans l'intervalle de 50 à moins de 100 % en poids des matières solides totales de la composition de revêtement.

4. Composition de revêtement suivant la revendication 1, dans laquelle l'acide est présent en une quantité comprise dans l'intervalle d'environ 7 à environ 20 % en poids des matières solides totales de la composition de revêtement.

5. Composition de revêtement suivant la revendication 1, dans laquelle l'aminoplaste est présent en une quantité comprise dans l'intervalle allant jusqu'à 30 % en poids des matières solides de la composition de revêtement.

6. Composition de revêtement suivant la revendication 1, dans laquelle les poly(hydroxyaminoéthers) sont constitués d'un ou plusieurs des éthers diglycidyliques d'un phénol dihydroxylique comprenant jusqu'à 80 % en moles des éthers du type éther diglycidylique de résorcinol.

7. Composition de revêtement suivant la revendication 1, dans laquelle le revêtement séché est thermoplastique, le séchage comprenant le traitement de la dispersion ou solution de revêtement par chauffage à une température inférieure à 80°C pendant une période de temps d'au moins 5 à 10 secondes jusqu'à deux minutes de telle sorte qu'un revêtement de la dispersion ou solution soit essentiellement transparent et sec au toucher.

8. Composition de revêtement suivant la revendication 1, dans laquelle le revêtement séché est un revêtement thermoplastique obtenu à partir d'une quantité d'aminoplaste inférieure à 30 % en poids des matières solides de la composition de revêtement.

9. Composition de revêtement suivant la revendication 1, qui comprend également un agent antimousse en une quantité inférieure à 3 % en poids de la composition, y compris les matières solides et l'eau.

10. Composition de revêtement suivant la revendication 9, dans laquelle l'agent antimousse est pratiquement dépourvu de solvant et est présent en une quantité de 0,01 à 1 % en poids de la composition, y compris les matières solides et l'eau.

11. Composition de revêtement suivant la revendication 1, qui comprend également au moins un constituant supplémentaire choisi entre des matières colorantes, des pigments, des colorants, des agents absorbant le rayonnement UV, des stabilisants UV, des antioxydants et des cires.

12. Composition de revêtement suivant la revendication 1, qui comprend un support choisi entre au moins l'eau et l'eau plus des cosolvants.

13. Composition de revêtement suivant la revendication 1, dans laquelle la densité de réticulation des constituants réticulables, en tant que degré de réticulation, est comprise dans l'intervalle de 5 % à 100 % de la réticulation totale.

14. Composition de revêtement suivant la revendication 1, dans laquelle le revêtement séché est un revêtement thermoplastique obtenu à partir d'une quantité d'aminoplaste inférieure à 10 % en poids des matières solides de la composition de revêtement.

15. Substrat non constitué d'un métal ou de verre, choisi entre un poly(téréphtalate d'alkylène) et des polyoléfines, comprenant le résidu séché de la composition de revêtement de la revendication 1.

16. Substrat en matière plastique choisi entre un poly(téréphtalate d'alkylène) et des polyoléfines, comprenant le résidu séché de la composition de revêtement de la revendication 8.

17. Substrat revêtu suivant la revendication 15, qui est une préforme pour le moulage par soufflage en un récipient en matière plastique, le récipient revêtu produit par soufflage ayant des propriétés de barrière au dioxyde de carbone et à l'oxygène supérieures à celles du récipient soufflé non revêtu.

18. Substrat revêtu suivant la revendication 16, comprenant 40 à 1000 milligrammes du revêtement obtenu par au moins un seul passage dans un dispositif de revêtement par écoulement ou dispositif de revêtement en rideau.

19. Substrat revêtu suivant la revendication 16, comprenant 40 à 500 milligrammes du revêtement obtenu par au moins un seul passage dans un dispositif de revêtement par écoulement ou dispositif de revêtement en rideau.

20. Substrat revêtu suivant la revendication 16, comprenant 40 à 300 milligrammes du revêtement obtenu par au moins un seul passage dans un dispositif de revêtement par écoulement ou dispositif de revêtement en rideau.

21. Substrat revêtu suivant la revendication 11, choisi dans le groupe comprenant des films et des récipients en matières plastiques moulés par soufflage, le papier et le carton.

22. Substrat en matière plastique choisi entre un poly(téréphtalate d'alkylène) et des polyoléfines, comprenant le résidu durci de la composition de revêtement de la revendication 1, dans lequel la matière plastique revêtue a des propriétés de barrière au dioxyde de carbone et à l'oxygène supérieures à celles de la matière plastique non revêtue et le revêtement a au moins une propriété choisie entre la résistance à l'eau, la résistance à l'humidité, la résistance aux lubrifiants de la chaîne de fabrication, la résistance aux acides, la résistance aux agents alcalins, la résistance aux boissons gazeuses, la résistance aux boissons acides et la résistance aux boissons alcoolisées pendant une période de temps allant jusqu'à environ 15 minutes dans les conditions ambiantes ou une résistance à l'eau glacée pendant 2 à 24 heures.

23. Composition aqueuse de revêtement durcissable contenant un polymère, comprenant :
a) au moins une dispersion ou solution aqueuse de poly(hydroxyaminoéthers) ou de polyétheramines préparés en mettant en contact un ou plusieurs des éthers diglycidyliques d'un phénol dihydroxylique avec une amine difonctionnelle dans des conditions suffisantes pour provoquer la réaction des groupements amine avec les groupements époxy afin de former un squelette polymère ayant des liaisons amine, des liaisons éther et des groupements hydroxyle appendus, comprenant une quantité d'éther diglycidylique de résorcinol d'environ 20 à environ 80 % en moles des éthers diglycidyliques, la polyétheramine étant présente en une quantité de 50 à moins de 100 % en poids des matières solides totales de la composition de revêtement, solubilisée avec un ou plusieurs acides protiques ou aprotiques choisis dans le groupe consistant en les acides phosphorique et lactique et leurs associations, en une quantité d'environ 5 à environ 30 % en poids sur la base des matières solides ;
b) au moins un éther alkylique de mélamine-formaldéhyde dispersible ou solubilisable dans l'eau, en une quantité allant jusqu'à 30 % en poids des matières solides de la composition de revêtement.

24. Composition de revêtement suivant la revendication 23, qui comprend un agent antimousse choisi dans le groupe comprenant des agents antimousse à base de silicones, des alcools, des éthers de glycols, des essences minérales, le Surfynol, des agents antimousse à base d'acétylènediol, le polysiloxane et n'importe quelles associations de deux ou plus de deux de ces agents, en une quantité comprise dans l'intervalle de 0,01 % à 2 % pour une composition de revêtement apte au revêtement par écoulement.

25. Composition de revêtement suivant la revendication 24, dans laquelle l'agent antimousse est une association de siloxaneglycol, d'organosiloxane et du produit de réaction du dioxyde de silicium et d'un polymère d'organosiloxane.

26. Composition de revêtement suivant la revendication 25, dans laquelle l'agent antimousse comprend, en pourcentage en poids des matières solides de l'agent antimousse, 55 % de polyglycol, 30 à 40 % d'organosiloxane et le pourcentage restant de siloxaneglycol.

27. Composition de revêtement suivant la revendication 23, dans laquelle l'aminoplaste est un éther alkylique de mélamine-formaldéhyde en une quantité comprise dans l'intervalle d'environ 0,5 à environ 8 % en poids des matières solides totales de la composition de revêtement.

28. Composition de revêtement suivant la revendication 23, dans laquelle la quantité d'éther diglycidylique de résorcinol dans la polyétheramine est comprise dans l'intervalle d'environ 50 à environ 60 % en mole des éthers diglycidyliques.

29. Composition de revêtement suivant la revendication 23, qui comprend un support et dans laquelle la quantité de matières solides totales de la composition est comprise dans l'intervalle de 10 à 45 % en poids.

30. Substrat en matière plastique choisi dans le groupe consistant en un poly(téréphtalate d'alkylène) et une polyoléfine, comprenant le revêtement durci séché obtenu à partir de la composition de revêtement suivant la revendication 23.

31. Substrat en matière plastique revêtu suivant la revendication 20, le substrat étant choisi entre le poly-(téréphtalate d'éthylène), le polypropylène, le papier et le carton.
